# EUROPEAN PATENT APPLICATION

(11) **EP 2 838 144 A1**
(43) Date of publication of application: **18.02.2015**
(21) Application number: 13775184.8
(22) Date of filing: 12.04.2013
(51) Int. Cl.: H01M 4/66, H01G 11/66

(54) **COLLECTOR, ELECTRODE STRUCTURE, NONAQUEOUS ELECTROLYTE BATTERY, AND ELECTRICITY STORAGE COMPONENT**

(30) Priority: 13.04.2012 JP 2012092465
(71) Applicant: UACJ Corporation, Tokyo 100-0004 (JP); UACJ Foil Corporation, Chuo-ku Tokyo 1030026 (JP)
(72) Inventor: KATO, Osamu, Tokyo 100-0004 (JP); SAITO, Sohei, Tokyo 100-0004 (JP); HONKAWA, Yukiou, Tokyo 100-0004 (JP); WASAMOTO, Mitsuyuki, Kusatsu-shi Shiga 525-0042 (JP); KATAOKA, Tsugio, Kusatsu-shi Shiga 525-0042 (JP); YAMABE, Satoshi, Kusatsu-shi Shiga 525-0042 (JP)
(74) Representative: Gulde & Partner
(86) International application number: PCT/JP2013/061034
(87) International publication number: WO 2013/154176

(57) **Abstract**

The present invention relates to current collectors, electrode structures, non-aqueous electrolyte batteries, and electrical storage devices (electrical double layer capacitors, lithium ion capacitors, and the like) that are capable to realize superior battery characteristics by suitably forming an active material layer by using an aqueous solvent. A current collector having a resin layer on at least one side of a conductive substrate, the resin layer being formed by a composition for current collector including an acryl-based resin containing acrylic acid ester and acryl amide or derivatives thereof as a main component; melamine or derivatives thereof; and carbon particles, is provided.

## Description

### TECHNICAL FIELD

The present invention relates to current collectors, electrode structures, non-aqueous electrolyte batteries, and electrical storage device (electrical double layer capacitors, lithium ion capacitors, and the like) that are capable to realize superior battery characteristics by suitably forming an active material layer by using an aqueous solvent.

### BACKGROUND

Energy density per weight or volume of a lithium ion battery is larger than those of a lead battery or a nickel-metal hydride battery. Therefore, usage of the lithium ion battery as the energy source enables weight reduction and size reduction of the equipment. Recently, there is a trend to use the lithium ion battery as the energy source of an electrically powered vehicles such as EV and HEV in addition to mobile electronic equipments. Accordingly, the lithium ion batteries are regarded to become more important.

Lithium ion batteries are batteries that are discharged and charged by the movement of the lithium ions between the positive electrode and the negative electrode. The ones having a three-layer structure of a positive electrode, a separator, and a negative electrode has been known.

The method for manufacturing the current collector for positive electrodes of lithium ion batteries is generally as follows. A positive electrode active material, a binding agent, and a conductive auxiliary agent are dispersed in a solvent, and then the mixture is coated onto a conductive substrate (for example, an aluminum foil), followed by drying to remove the solvent, thereby forming the active material layer. Here, in order to improve the adhesion between the conductive substrate and the active material layer, a measure to coat the conductive substrate with a conductive resin layer and then forming the active material layer thereon has been suggested. As the binding agent for such conductive resin layer, a phenol resin, a melamine resin, an urea formaldehyde resin, a vinyl resin, an alkyd resin, a synthetic rubber and the like can be used. Graphite, carbon black and the like are further added (for example, refer to Patent Literature 1).

### CITATION LIST

### PATENT LITERATURE

Patent Literature 1: JPS63-121265A

### SUMMARY OF THE INVENTION

### TECHNICAL PROBLEM

Conventionally, organic solvents such as N-methyl pyrrolidone (NMP) has been used as the solvent for the active material layer. Recently, aqueous solvents, especially water, is gaining its use to reduce raw material cost and environmental burden. However, the active resin layer made by using aqueous resin is inferior regarding the adhesion with the conductive substrate. Even when a layer of conductive resin layer is provided, decrease in the performance of the battery was still observed.

The present invention has been made by taking the afore-mentioned circumstances into consideration. An object of the present invention is to allow secure and favorable forming of the active material layer manufactured by using an aqueous resin, especially water. In addition, an object of the present invention is to provide a current collector, an electrode structure, a non-aqueous electrolyte battery, and an electrical storage device that can achieve superior battery performance, and a composition for the current collector.

### SOLUTION TO PROBLEM

By using a current collector as described herein, an active material layer manufactured by using an aqueous solvent can be formed securely and adequately, and thus a non-aqueous electrolyte battery and electrical storage device that can achieve a superior battery performance can be obtained.

That is, according to the present invention, a current collector having a resin layer on at least one side of a conductive substrate, wherein the resin layer is formed with a composition for current collector comprising an acryl-based resin containing acrylic acid ester and acryl amide or derivatives thereof as a main component, melamine or derivatives thereof, and carbon particles, is provided.

The present inventors have found that when an active material layer is formed on a conductive substrate or on a conductive layer by using an aqueous solvent, severe deterioration of the conductive substrate (for example, aluminum) and the conductive resin layer were observed. Further, the inventors have focused on the finding that such deterioration varied largely by the type of the active material. Accordingly, the inventors have come to a conclusion that the deterioration was caused by the active material using the aqueous solvent going through a reaction to become alkaline, while the resin constituting the conventional conductive resin layer had low alkali resistance. In addition, the inventors have investigated the dispersibility of the carbon particles in the conventional resin as the material of the conductive resin layer, especially in the conventional acryl-based resin, and have found that the extremely low dispersibility was the cause of the deterioration of the battery performance.

The inventors have conducted extensive studies in order to improve the battery performance. During such study, the inventors have found that when a resin comprising an acryl-based resin containing acrylic acid ester and acryl amide or derivatives thereof as a main component, and melamine or derivatives thereof is used as the conductive resin layer, the active material layer can be formed on the conductive substrate or on the conductive resin layer without deterioration by using an aqueous solvent. Accordingly, superior battery performance can be achieved, leading to completion of the invention.

### BRIEF DESCRIPTION OF THE DRAWINGS

[FIG. 1] FIG. 1 is a side view showing a structure of the current collector according to one embodiment of the present invention.
[FIG. 2] FIG. 2 is a side view showing a structure of an electrode structure constructed by using the current collector according to one embodiment of the present invention.

### DESCRIPTION OF EMBODIMENTS

Hereinafter, the current collector according to one embodiment of the present invention will be described with reference to the Drawings.

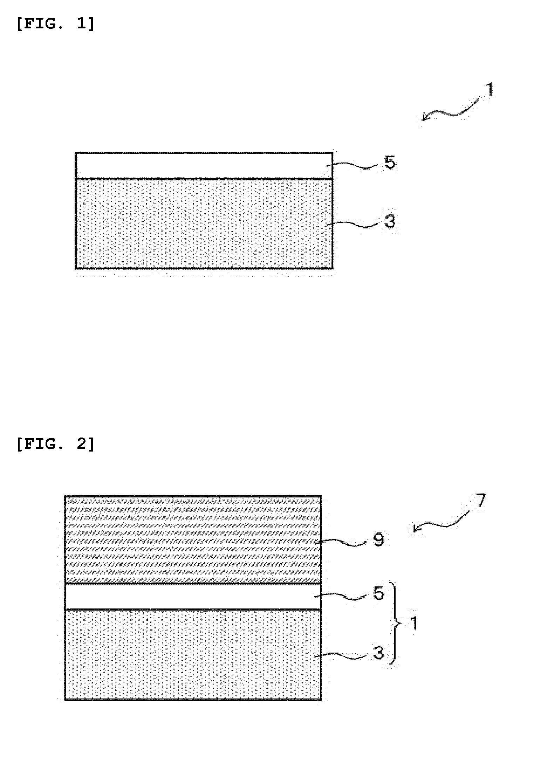

As shown in FIG. 1, the current collector 1 of the present invention is constructed by providing a resin layer 5 having electrically conducting property (resin layer for current collector) on at least one side of the conductive substrate 3. Here, the resin layer 5 comprises an acryl-based resin containing acrylic acid ester and acryl amide or derivatives thereof as a main component, melamine or derivatives thereof, and carbon particles (not shown).

In addition, as shown in FIG. 2, an electrode structure 7 which is suitable for non-aqueous electrolyte batteries, electrical double layer capacitors, or for lithium ion capacitors, can be structured by forming an active material layer or an electrode material layer 9 on the resin layer 5 of the current collector 1. Regarding the current collector 1 of the present invention, the resin layer 5 does not deteriorate by the reaction of the active material which is manufactured as the active material layer or as the electrode material layer 9 by using an aqueous solvent, especially water. Therefore, the adhesion between the resin layer 5 and the conductive substrate 3, and the adhesion between the resin layer 5 and the active material layer or the electrode material layer 9 is high, and thus superior battery performance can be achieved.

Hereinafter, each of the components will be described in detail.

### (1) Conductive Substrate

As the conductive substrate 3 of the present invention, various types of conductive substrates for the usage in non-aqueous electrolyte batteries, electrical double layer capacitors, or lithium ion capacitors can be used. Specifically, substrates of aluminum, aluminum alloy, and substrates of copper, stainless steel, nickel for negative electrodes can be used for example. Among these, from the viewpoint of the balance between high electrical conductivity and cost, aluminum, aluminum alloy, and copper is preferable. There is no particular limitation with respect to the thickness of the conductive substrate 3, however, it is preferable that the thickness is 5 µm or more and 50 µm or less. When the thickness is less than 5 µm, the strength of the foil would be insufficient, and thus it becomes difficult to form the resin layer and the like. When the thickness is more than 50 µm, the other components, particularly the active material layer or the electrode material layer 9 need be thinned. In particular, when non-aqueous electrolyte batteries, electrical storage devices such as electrical double layer capacitors or lithium ion capacitors are being made, there are cases where the capacity becomes insufficient.

### (2) Resin Layer and Composition for Current Collector

In the present invention, the resin layer 5 formed by the composition for current collector is provided on the conductive substrate 3. The method for forming the resin layer 5 is not particularly limited, so long as it is formed by the composition for current collector of the present invention. Here, it is preferable that a solution, dispersion solution, paste and the like of the resin is coated on the afore-mentioned conductive substrate, followed by baking. When coating, a roll coater, a gravure coater, a slit dye coater and the like can be used, and is not limited to these. The temperature for baking is preferably 140 to 300°C (as the final temperature of the conductive substrate), and the baking time is preferably 5 to 120 seconds.

It is necessary that the resin of the resin layer 5 of the present invention contains an acryl-based resin containing acrylic acid ester and acryl amide or derivatives thereof as a main component, melamine or derivatives thereof, and carbon particles as the essential component. Details will be described hereinafter.

### <Acryl-based Resin>

The acryl-based resin used in the present invention is a resin formed from monomers containing acrylic acid ester and acryl amide or derivatives thereof, as a main component. The ratio of the total amount of the acrylic acid ester and acryl amide or derivatives thereof contained in the monomer of the acryl-based resin is 50 mass% or higher for example, preferably 70 mass% or higher. The upper limit is not particularly specified, and the monomers of the acryl-based resin may substantially contain only acrylic acid ester and acryl amide or derivatives thereof.

The acryl-based resin containing both of acrylic acid ester and acryl amide has superior dispersing properties, and thus it can decrease the resistance of the resin layer. In addition, since such acryl-based resin has superior alkali resistance and adhesion with the substrate and with the active material layer, batteries with sufficient high rate characteristics and battery lifetime can be obtained when the active material layer is formed by using an active material paste using an aqueous solvent. Acrylic acid ester can improve the dispersibility of the carbon particles, and thus decrease the resistance of the resin layer. The type of the acrylic acid ester is not particularly limited. Here, esters of acrylic acid with C1 to C6 alcohol is preferable. Examples of the acrylic acid are methyl acrylate, ethyl acrylate, isopropyl acrylate, and butyl acrylate, where butyl acrylate is preferable. When the molecular weight of the ester portion is too low, there are cases where the dispersibility of the conductive material decreases, leading to increase in resistance. On the other hand, when the molecular weight of the ester portion is too high, adhesion property decreases. Acryl amide or derivatives thereof can enhance the adhesion between the resin layer 5 and the conductive substrate 3, and the adhesion between the resin layer and the active material layer. As the derivative of acryl amide, the one having at least one among a methylol group, an ethylol group, and a glycidyl group is preferable. Such acryl amide derivative can further enhance the adhesion between the resin layer and the active material layer, and thus extend the lifetime of the battery. In particular, N-methylol acryl amide, N,N-dimethylol acryl amide, N-ethylol acryl amide, N,N-diacetone acryl amide, N-methyl acryl amide, N-glycidyl acryl amide, N-isopropyl acryl amide and the like can be mentioned for example. The ratio of acryl amide or derivatives thereof (parts by mass) against acrylic acid ester (parts by mass) is not particularly limited. Here, it may be 0.1 to 10 for example. Specific examples of such ratio are 0.1, 0.2, 0.5, 1, 2, 3, 4, 5, 6, 7, 8, 9, and 10, and may be in the range of two values selected from the values exemplified herein.

It is preferable that the acryl-based resin of the present invention further contains at least one of the methacrylic acid ester and acrylonitrile as the monomer component. By using methacrylic acid ester in combination with acrylic acid ester, dispersibility of the carbon particles can be enhanced, and thus resistance of the resin layer can be further decreased. The type of the methacrylic acid ester is not particularly limited. Here, esters of methacrylic acid with C1 to C6 alcohol is preferable. Examples of the methacrylic acid ester are methyl methacrylate, ethyl methacrylate, isopropyl methacrylate, and butyl methacrylate, where butyl methacrylate is preferable. When the methacrylic acid ester is an ester other than the ester of methacrylic acid with C1 to C6 alcohol, there are cases where the dispersibility of the conductive material decreases, leading to increase in resistance and decrease in adhesion properties. Since methacrylic acid ester and acrylonitrile can improve the alkali resistance, deterioration of the resin layer can be suppressed when the active material layer is formed by coating an aqueous paste, thereby preventing the resistance of the resin layer from increasing.

The acryl-based resin of the present invention may solely contain the afore-mentioned components, or may contain components other than those mentioned above, so long as it does not substantially alter the physical properties.

The weight average molecular weight of the acryl-based resin is, for example, 3x10⁴ to 100x10⁴. Specific examples of the weight average molecular weight are 3x10⁴, 4x10⁴, 5x10⁴, 6x10⁴, 7x10⁴, 8x10⁴, 9x10⁴, 10x10⁴, 15x10⁴, 20x10⁴, 30x10⁴, 40x10⁴, 50x10⁴, 60x10⁴, 70x10⁴, 80x10⁴, 90x10⁴, and 100x10⁴, and may be in the range of two values selected from the values exemplified herein. When the molecular weight is too small, the flexibility of the resin layer 5 becomes low. In such case, when the current collector 1 is wound with a small radius of curvature, a crack may occur in the resin layer 5, resulting in decrease of the capacity of the battery and the like. When the molecular weight is too large, the adhesion property tends to become low. The ratio of the number average molecular weight against the weight average molecular weight is, for example, 3 to 10. Specific examples of such ratio are 3, 4, 5, 6, 7, 8, 9, and 10, and may be in the range of two values selected from the values exemplified herein. The weight average molecular weight and the number average molecular weight can be measured with a resin solution before adding the carbon particles, by using GPC (gel permeation chromatography).

The glass transition temperature of the acryl-based resin is not particularly limited. Here, it is preferably 10 to 100 °C. When the glass transition temperature is too low, heat resistance would be insufficient. On the other hand, when the glass transition temperature is too high, the resin layer becomes too rigid, and thus there are cases where the resin layer peels off when applied for electrodes that are wound. Specific examples of the glass transition temperature are, 10, 15, 20, 25, 30, 35, 40, 45, 50, 55, 60, 65, 70, 75, 80, 85, 90, 95, and 100 °C, and may be in the range of two values selected from the values exemplified herein.

### <Melamine or Derivatives Thereof>

Melamine or derivatives thereof can cross-link the acryl-based resin and improve alkali resistance. Derivatives of melamine can be obtained by forming a methylol group via condensation reaction of melamine and formaldehyde (further addition reaction may be carried out for obtaining polynuclear compounds), and then alkylating the methylol group with alcohol (example: methyl alcohol or butyl alcohol) when necessary. As the derivatives of melamine, a fully-alkylated type having almost all of its methylol group alkylated, an imino-type having many remaining hydrogen groups that are not converted into methylol groups, and a methylol type having many methylol groups that are not alkylated, can be mentioned for example.

In the present invention, it is preferable to use the fully-alkylated type melamine. The fully-alkylated melamine does not have a methylol group nor an imino group, but has methylol groups that are completely etherified generally with C1 to C4 mono-valent alcohols, such as methanol, n-butanol, isobutanol and the like. The average degree of condensation of the fully-alkylated melamine is 2 or lower. When the fully-alkylated melamine is used, flexibility of the resin layer 5 can be improved, and the adhesion with the active material layer 9 after pressing can be improved.

### <Carbon Particles>

The resin layer 5 of the present invention is provided in between the conductive substrate 3 and the active material layer or the electrode material layer 9, and functions as a pathway for the electrons that move between them. Therefore, the resin layer 5 also requires electron conductivity. The resin itself has high insulating property, and thus carbon particles having conductivity need be formulated in order to provide electron conductivity. As the carbon particles used in the present invention, acetylene black, Ketjen black, furnace black, carbon nanotube, and various graphite particles can be used.

In the present invention, it is preferable that the carbon particles are finely and uniformly dispersed. When the carbon particles are finely and uniformly dispersed, current would flow uniformly through the resin layer, thereby enabling to use more of the active materials effectively and allowing improvement of the battery capacity. In particular, it is preferable that the average particle diameter measured at the surface of the resin layer in 10 µm or less, and the upper limit of the average particle diameter of the carbon particles is 10 µm, 6 µm, 5 µm, or 4 µm, for example. When it exceeds 10 µm, the dispersion of the carbon particles would become un-uniform, leading to cases where the battery capacity decrease. Here, there is no particular lower limitation with respect to the diameter of the carbon particles, however, it is preferable that the diameter of the carbon particles is 0.01 µm or larger. This is since when the particle diameter is excessively small, mixing of the carbon particles into the acryl-based resin would become difficult and the carbon particles would be prone to littering which makes handling difficult. Accordingly, the lower limit of the diameter of the carbon particles is 0.01 µm, 0.02 µm, 0.03 µm, or 0.05 µm. The diameter of the carbon particles at the surface of the resin layer can be measured by element mapping using EMPA (electron probe micro analyzer) or FE-EPMA (field emission electron probe micro analyzer). When the mapping is carried out for an element contained in the acryl resin but hardly in the carbon particles (for example, oxygen), the portion where such element is not detected can be assumed as the carbon particle. Then, the diameter (when such portion is not circular, the average of the maximum and minimum diameter) of such portion can be measured.

Conventional methods can be applied to disperse the carbon particles in the resin component solution. For example, the carbon particles can be dispersed using a planetary mixer, a ball mill, a homogenizer and the like. However, even when the average particle diameter of the carbon particles in the coating is kept at 10 µm or lower, there are cases where the carbon particles in the resin layer become coarse by the re-aggregation of the carbon particles during the coating process. Therefore, it is preferable to disperse the carbon particles in the resin solution by a method which can achieve a condition in which carbon particles hardly re-aggregate. Hereinafter, a method for dispersing the carbon particles so that they hardly re-aggregate will be explained by referring to a case where Disper is used for dispersion. As described above, it is preferable to define the concentration change per unit time, in order to disperse the carbon particles finely and uniformly in the resin phase. Specifically, it is preferable that the carbon particles are added by the rate of 0.1 to 10 parts by mass/min with respect to 100 parts by mass of the resin (total sum of the acryl-based resin and melamine or derivatives thereof) while dispersing. This rate shall be kept from throughout the addition of the carbon particles. When the rate of addition is too slow, the productivity is poor, and may not be economically advantageous. On the other hand, when the rate of addition is too fast, re-aggregation of the carbon particles in the resin layer tend to occur, and thus the carbon particles in the resin layer would become coarse and un-uniform. The addition amount of the carbon particles is preferably 20 to 100 parts by mass with respect to 100 parts by mass of the resin in the resin layer. When the addition amount is less than 20 parts by mass, the resistance of the resin layer formed would become high. On the other hand, when the addition amount exceeds 100 parts by mass, adhesion with the conductive substrate would decrease.

It is preferable that the thickness of the resin layer 5 is 0.3 to 20 µm. When the thickness is less than 0.3 µm, the resin layer cannot fully coat the substrate, leading to cases where sufficient battery performance cannot be obtained. When the thickness exceeds 20 µm, the resistance of the resin layer becomes too high, thereby leading to cases where sufficient battery performance cannot be obtained. Specific examples of the thickness of the resin layer 5 are 0.3, 0.5, 1, 2, 5, 10, 15, and 20 µm, and may be in the range of two values selected from the values exemplified herein.

The manufacturing method of the current collector of the present invention is not particularly limited. Here, it is effective to provide a known pretreatment to the conductive substrate when forming the resin layer on the conductive substrate, in order to improve the adhesion property of the surface of the conductive substrate. In particular, when a conductive substrate manufactured by rolling is used, residual rolling oils and wear powders may be found on the surface of the conductive substrate. In such cases, they can be removed by degreasing, thereby improving the adhesion property. In addition, dry-activation treatment such as corona discharge treatment can also improve adhesion property.

### Electrode Structure

By forming an active material layer or an electrode material layer 9 on at least one side of the current collector of the present invention, the electrode structure 7 of the present invention can be obtained. The electrode structure for the electrical storage device formed with the electrode material layer will be described later. First, in the case of an electrode structure with an active material layer formed thereon, this electrode structure can be used with a separator, non-aqueous electrolyte solution and the like to manufacture an electrode structure (including parts for batteries) for a non-aqueous electrolyte battery, such as a lithium ion secondary battery. In the electrode structure for the non-aqueous electrolyte battery and the non-aqueous electrolyte battery of the present invention, conventional parts for non-aqueous electrolyte battery can be used for the parts other than the current collector.

Here, in the present invention, the active material layer formed as the electrode structure may be the ones conventionally proposed for the non-aqueous electrolyte battery. For example, positive electrode structure of the present invention can be obtained by coating with a paste the current collector of the present invention which uses aluminum, followed by drying. Here, the paste for the positive electrode structure is obtained by using LiCoO₂, LiMnO₂, LiNiO₂ and the like as an active material and using carbon black such as acetylene black and the like as carbon particles, and dispersing the active material and the conductive material in PVDF as a binder or in the water dispersion type PTFE (polytetrafluoroethylene).

The negative electrode structure of the present invention can be obtained by coating an active material layer forming material in the form of a paste, followed by drying. The current collector for the negative electrode of the present invention uses copper. Here, the paste for the negative electrode structure is obtained by using graphite (black lead), graphite, mesocarbon microbead and the like as an active material, dispersing the active material in CMC as a thickening agent, and then mixing the resulting dispersion with SBR as a binder.

### Non-aqueous Electrolyte Battery

The present invention may be a non-aqueous electrolyte battery. In such case, there is no particular limitation except that the current collector of the present invention is used. For example, the non-aqueous electrolyte battery of the present invention can be obtained by sandwiching a separator immersed in an electrolyte solution for non-aqueous electrolyte battery containing non-aqueous electrolyte, in between the afore-mentioned positive electrode structure and the negative electrode structure having the current collector of the present invention as a constructing component. As the non-aqueous electrolyte and the separator, the conventional ones for the non-aqueous electrolyte battery can be used. The electrolyte solution can use carbonates, lactones or the like as a solvent. For example, LiPF₆ or LiBF₄ as an electrolyte can be dissolved in a mixture of EC (ethylene carbonate) and EMC (ethyl methyl carbonate) and used. As the separator, a membrane made of polyolefin having microporous can be used for example.

### Electrical Storage Device (Electrical Double Layer Capacitor, Lithium Ion Capacitor and the Like)

The current collector of the present invention can be applied to an electrical storage device such as an electrical double layer capacitor, lithium ion capacitor and the like, which require charge and discharge with a large current density at high speed. The electrode structure for the electrical storage device of the present invention can be obtained by forming an electrode material layer on the current collector of the present invention. The electrical storage device such as the electrical double layer capacitor, lithium ion capacitor and the like can be manufactured with the electrode structure thus obtained, a separator, and an electrolyte solution. In the electrode structure and the electrical storage device of the present invention, conventional parts for the electrical double layer capacitor and lithium ion capacitor can be used for the parts other than the current collector.

The electrode material layers of the positive electrode and the negative electrode can both be structured with an electrode material, carbon particles, and a binder. In the present invention, the electrical storage device can be obtained by first forming the afore-mentioned electrode material layer onto at least one side of the current collector of the present invention to give the electrode structure. Here, as the electrode material, the ones conventionally used as the electrode material for the electrical double layer capacitor or for the lithium ion capacitor, can be used. For example, carbon powders such as activated charcoal and graphite (black lead), and carbon fibers can be used. As the carbon particles, carbon blacks such as acetylene black and the like can be used. As the binder, PVDF (polyvinylidene fluoride) SBR (styrene butadiene rubber), and water dispersion type PTFE can be used for example. In addition, the electrical storage device of the present invention can construct an electrical double layer capacitor or a lithium ion capacitor by fixing a separator in between the electrode structures of the present invention, and then immersing the separator in the electrolyte solution. As the separator, a membrane made of polyolefin having microporous, a non-woven fabric for an electrical double layer capacitor, and the like can be used for example. Regarding the electrolyte solution, carbonates and lactones can be used as the solvent for example, and tetraethylammonium salt, triethylmethylammonium salt and the like can be used as the electrolyte, and hexafluorophosphate, tetrafluoroborate and the like can be used as the negative ion. Lithium ion capacitor is structured by combining a negative electrode of a lithium ion battery and a positive electrode of an electrode double layer capacitor. There is no particular limitation with respect to the manufacturing method and known methods can be adopted, except that the current collector of the present invention is used.

### EXAMPLES

Hereinafter, the present invention will be described specifically with reference to Examples and Comparative Examples of the present invention, however, the present invention shall not be limited to the following Examples.

### <1. Evaluation of Current Collectors>

### <Preparation of Current Collectors>

Polymerization was carried out with each of the acryl monomers as shown in Table 1 to obtain each of the aqueous acryl emulsions. The weight average molecular weight of the acryl-based resin was adjusted to 20x10⁴ to 50x10⁴. The glass transition temperature of each of the acryl-based resin was measured using DSC (differential scanning calorimetry). In Table 1, the addition amount of the monomer component of the acryl-based resin and the addition amount of the cross-linker are both shown by parts by mass.

As shown in Table 1, cross-linkers were added to each of the acryl emulsions. Then, a coating was obtained by adding acetylene black gradually within the concentration change as shown in Table 1, while agitating with Disper (rotation number: 4000 rpm). The total amount of acetylene black added was 60 parts by mass with respect to 100 parts by mass of the solids of the resin (acryl-based resin and cross-linker). Carbon particles were not added in Comparative Example 5.

The coating was coated onto one surface of an aluminum foil having a thickness of 20 µm (JIS A1085) using a bar coater. Subsequently, the coating was baked for 24 seconds with the final temperature of the substrate as 190°C.

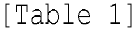

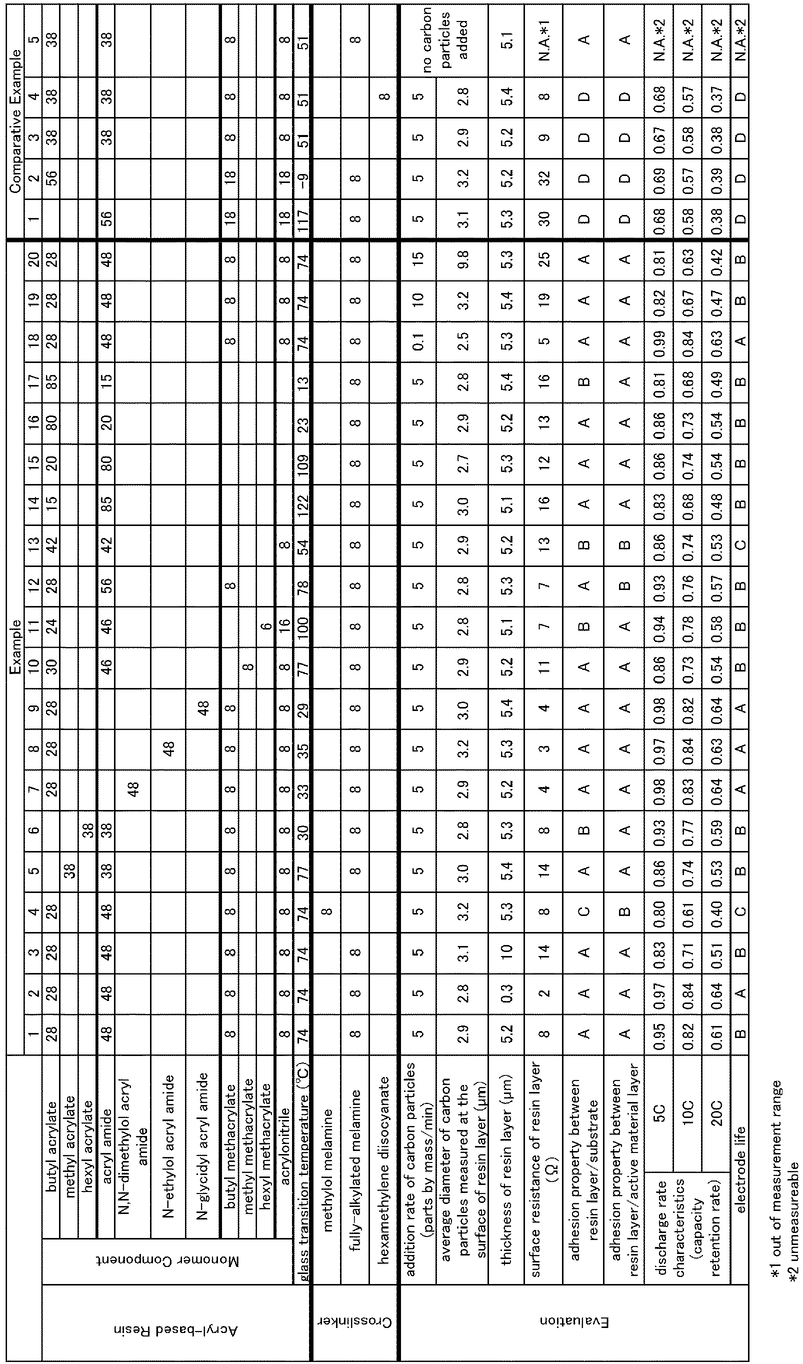

### <Average Particle Diameter of Carbon Particles Measured at the Surface of Resin Layer>

The surface of the resin was subjected to oxygen mapping with FE-EPMA, and the portion where oxygen was hardly detected was taken as the carbon particle. Then, average was calculated by measuring 10 particle diameters.

### <Measurement of Thickness of Resin Layer>

The thickness of the resin layer was obtained in the following manner. The cross section of the entire resin was observed using FE-SEM (field emission-type scanning electron microscope). The thickness of the resin layer was measured at portions where the particle diameter of the carbon particle does not exceed 1/3 of the film thickness.

### <Method for Measuring Electrical Resistance of Resin Layer>

"Loresta-EP" available from Mitsubishi Chemical Analytech Co., Ltd. was used, and the surface resistance of the resin layer was measured by the two-terminal method.

### <Method for Evaluating Adhesion Between Resin Layer and Substrate>

A cellophane tape was adhered to the surface of the resin layer, followed by peeling at once. The conditions of the peeling of the resin layer were evaluated.
A: no peeling observed
B: approximately 1/4 of the portion where the cellophane tape was adhered peeled off
C: approximately 1/2 of the portion where the cellophane tape was adhered peeled off
D: 3/4 or more of the portion where the cellophane tape was adhered peeled off

### <2. Evaluation of Lithium Ion Battery>

As described below, adhesion between the active material layer and the resin layer was evaluated with the positive electrode material obtained by forming the active material layer using an aqueous active material paste. Then, discharge rate characteristics and electrode lifetime were evaluated for the lithium ion battery structured by using such positive electrode material. The results are shown in Table 1.

### <Manufacturing Method of Lithium Ion Battery>

The positive electrode active material paste was prepared by mixing 24 parts by mass of LiMn₂O₄ powder as the active material, 0.28 parts by mass (by solids) of water dispersion type PTFE as the binder resin, 2.5 parts by mass of acetylene black as the conductive material, and 33 parts by mass of water, for 15 minutes using a deaerating agitator. The positive electrode active material paste thus obtained was coated on each of the current collectors by the thickness of 70 µm, thereby obtaining the positive electrode material.

Further, 100 parts by mass of synthetic graphite was dispersed in 25 parts by mass of 2% CMC (carboxymethyl cellulose) aqueous solution (solids: 0.5 parts by mass), followed by mixing with an aqueous dispersion of SBR (styrene butadiene rubber) as the binder (solids: 40 parts by mass) to give a paste. Subsequently, the paste thus obtained was coated on a copper foil (20 µm thickness) by the thickness of 70 µm, thereby obtaining the negative electrode material. A microporous separator made of polypropylene was sandwiched in between the positive electrode material and the negative electrode material, and was then placed in a battery case, thereby obtaining a coin battery. A 1 mol/L solution of LiPF₆ in EC (ethylene carbonate) and EMC (ethylmethyl carbonate) was used as the electrolyte solution.

### <Method for Evaluating Adhesion Between Resin Layer and Active Material Layer>

A cellophane tape was adhered to the surface of the active material layer, followed by peeling at once. The conditions of the peeling of the resin layer were evaluated. The symbols in the Table are given as below.
A: no peeling observed
B: approximately 1/4 of the portion where the cellophane tape was adhered peeled off
C: approximately 1/2 of the portion where the cellophane tape was adhered peeled off
D: 3/4 or more of the portion where the cellophane tape was adhered peeled off

### <Method for Evaluating Discharge Rate Characteristics>

Discharge capacity of these lithium ion batteries (Value relative to that at 0.2C) was observed for the discharge current rate of 5C, 10C, and 20C, when the upper voltage limit of charged state was 4.2 V, charging current was 0.2C, discharge final voltage was 2.8 V, and the temperature was 25°C. (Here, 1C is the value of the current (A) when the current capacity (Ah) of the battery is taken out in 1 hour (h). At 20C, the current capacity of the battery can be taken out in (1/20)h = 3 min. On the other hand, the battery can be charged in 3 minutes.) When the capacity retention rate is 0.80 or more at 5C, 0.60 or more at 10C, 0.40 or more at 20C, the high rate characteristics would be sufficient.

### <Method for Evaluating Battery Lifetime>

The battery was first charged at an electrolyte solution temperature of 40°C, upper voltage limit of 4.2V, and a charging current of 10C. Then the battery was discharged to a final voltage of 2.8V, at a discharging current of 10C. Number of cycles when the discharge capacity reaches 60% of the discharge capacity of the first cycle was observed (maximum 500 cycles), and was evaluated in accordance with the following criteria. When the number of cycles was 400 or more, the electrode lifetime would be sufficient.
A : 500 cycles or more
B : 450 cycles or more and less than 500 cycles
C : 400 cycles or more and less than 450 cycles
D : less than 400 cycles

### <Discussion>

All of the Examples of the present invention had sufficient capacity retention rate and electrode lifetime. On the other hand, Comparative Example 1 contained methacrylic acid ester but did not contain acrylic acid ester, and thus the dispersibility of the carbon particles was not sufficient, resulting in increased resistance of the resin layer and insufficient adhesion property. Such result shows that methacrylic acid ester cannot replace acrylic acid ester, and that it is essential to contain acrylic acid ester in order to improve adhesion property. Comparative Example 2 did not contain acryl amide, and thus the dispersibility of the carbon particles was not sufficient, resulting in increased resistance of the resin layer and insufficient adhesion property. Comparative Example 3 did not contain a crosslinker, and thus adhesion property was insufficient. Comparative Example 4 did not contain melamine as the crosslinker, and thus adhesion property was insufficient. As a result, they had inferior capacity retention rate and electrode lifetime. Comparative Example 5 did not contain carbon particles, and thus resistance became extremely high, failing to function as a battery.

### Explanation of Symbols

- 1:: current collector
- 3:: conductive substrate
- 5:: resin layer (resin layer for current collector)
- 7:: electrode structure
- 9:: active material layer or electrode material layer

## Claims

1. A current collector having a resin layer on at least one side of a conductive substrate, the resin layer being formed by a composition for current collector comprising:
an acryl-based resin containing acrylic acid ester and acryl amide or derivatives thereof as a main component;
melamine or derivatives thereof; and
carbon particles.

2. The current collector of Claim 1, wherein the acrylic acid ester is butyl acrylate.

3. The current collector of Claim 1 or 2, wherein the acryl amide derivative has at least one selected from the group consisting of a methylol group, an ethylol group, and a glycidyl group.

4. The current collector of any one of Claims 1 to 3, wherein the acryl-based resin further contains at least one selected from the group consisting of methacrylic acid ester and acrylonitrile.

5. The current collector of any one of Claims 1 to 4, wherein a glass transition temperature of the acryl-based resin is 10 to 100°C.

6. The current collector of any one of Claims 1 to 5, wherein in the acryl-based resin, the acrylic acid ester is contained by 20 to 80 mass%, and the acryl amide or derivatives thereof is contained by 20 to 80 mass%.

7. The current collector of any one of Claims 1 to 6, wherein an average particle diameter of the carbon particles measured at a surface of the resin layer is 10 µm or less.

8. A manufacturing method for the current collector of any one of Claims 1 to 7, comprising the steps of:
adding carbon particles to a resin solution containing acryl-based resin and melamine or derivatives thereof to obtain the composition for current collector; and
coating the composition for current collector on the conductive substrate to form the resin layer; wherein
the carbon particles are added by an addition rate of 0.1 to 10 parts by mass/min with respect to 100 parts by mass of the resin throughout the addition of the carbon particles.

9. An electrode structure comprising an active material layer or an electrode material layer on the resin layer of the current collector of any one of Claims 1 to 7.

10. A non-aqueous electrolyte battery or an electrical storage device comprising the electrode structure of Claim 9.

11. A composition for current collector comprising a composition used to form the resin layer of the current collector of any one of Claims 1 to 7.
